# NEW EUROPEAN PATENT SPECIFICATION

(11) **EP 3 016 520 B2**
(45) Date of publication and mention of the opposition decision: **14.09.2022**
(45) Mention of the grant of the patent: 24.04.2019
(21) Application number: 14734156.4
(22) Date of filing: 01.07.2014
(51) Int. Cl.: A23F 5/14, A23F 5/40, A23C 11/08, A23L 2/39

(54) **COFFEE MIX COMPOSITIONS**
KAFFEEMIX-ZUSAMMENSETZUNGEN
COMPOSITIONS DE MÉLANGES DE CAFÉ

(30) Priority: 02.07.2013 EP 13174702
(43) Date of publication of application: 11.05.2016
(73) Proprietor: Société des Produits Nestlé S.A., 1800 Vevey (CH)
(72) Inventor: DAENZER-ALLONCLE, Martine, F-25370 Les Hôpitaux Neufs (FR); DUBOIS, Cédric, CH-1260 Nyon (CH); ELSBY, Kevan, CH-1350 Orbe (CH); FRIES, Lennart, CH-1006 Lausanne (CH); MURITH, Mathieu, CH-1630 Bulle (CH); NIEDERREITER, Gerhard, CH-1073 Savigny (CH); POUZOT, Matthieu, CH-1010 Lausanne (CH); SRBLJIN, Marija, CH-1350 Orbe (CH)
(74) Representative: Plougmann Vingtoft a/s
(86) International application number: PCT/EP2014/063938
(87) International publication number: WO 2015/000885

(56) References cited:
- EP-A1- 0 560 609
- EP-A1- 1 000 548
- US-A- 3 653 911
- US-A- 5 928 703

## Description

### Technical field of the invention

The present invention relates to coffee mixes.

### Background of the invention

Creamers are widely used as whitening agents with hot and cold beverages such as, for example, coffee, cocoa, tea, etc. They are commonly used in place of milk and/or dairy cream. Creamers may come in a variety of different flavors and provide mouthfeel, body, and a smoother texture. Creamers can be in liquid or powder forms. A liquid creamer may be intended for storage at ambient temperatures or under refrigeration, and should be stable during storage without phase separation, creaming, gelation and sedimentation. The creamer should also retain a constant viscosity over time. When added to cold or hot beverages such a coffee or tea, the creamer should dissolve rapidly, provide a good whitening capacity, and remain stable with no feathering and/or sedimentation while providing a superior taste and mouthfeel. Mouthfeel, also denoted richness, texture or creaminess, is usually provided by the oil emulsion present in the creamer.

Coffee mixes are powdered products used to prepare e.g. cappuccino and other coffee beverages containing a milk component. They normally consist of a simple dry mixture of soluble coffee powder, creamer powder (milk component) and sweetener (e.g. sugar). It is known that the addition of roast and ground coffee (r&g) particles to soluble coffee powders can improve the aroma of the coffee. Usually, it is added by simple dry mixture of the powders or by introducing the r&g particles into the concentrated coffee extract - prior to drying.

Coffee aroma is responsible for all coffee flavor attributes other than the mouthfeel and sweet, salt, bitter, and sour taste attributes that are perceived by the tongue. Therefore coffee aroma is the most important attribute to specialty coffee. Even instant coffee has the components responsible for stimulation of our taste buds. The difference, however, is that instant coffee lacks most of the aromatic volatile compounds causing a dramatic decrease in the overall coffee flavor.

Thus there is a need for a coffee composition that can result in enhanced aroma profile. Improved aroma release would be advantageous, and in particular a more efficient and/or reliable process for providing compositions with improved aromas would be advantageous.

EP 100 548 describes a self-whitening coffee and method of manufacture by spray drying a caseinate-free aqueous emulsion. This document does not relate to a obtaining a micronized product. The advantage of the process of the present invention is that mixing oil with micronized roast and ground coffee and mixing this composition with a creamer avoids flocculation, particle sedimentation and phase separation. Furthermore the composition obtained has a consistent homogenous mixture with one color. US-A-3 653 911 discloses a powdered prelightened coffee composition by spray drying a blend of a non-dairy lightener and a coffee percolate.

### Summary of the invention

A creamer component usually contains oil and a process is described herein, wherein r&g particles are added into the oil part of a creamer. The r&g particles are mixed with oil during production of the creamer and then the oil and r&g mixture may be wet ground to achieve the desired particle size of r&g particles and to ensure proper dispersion into the oil phase. The oil and micronized r&g mixture is then used to produce a creamer with coffee aroma as conventionally for producing a powdered or liquid creamer. The creamer is mixed with soluble coffee powder and optionally a sweetener to produce a coffee mix.

Thus, an object of the present invention relates to coffee mixes comprising creamers with improved aroma profiles.

In particular, it is an object of the present invention to provide coffee mixes comprising creamers that solve the above mentioned problems of the prior art with aroma release.

The present invention relates to a coffee mix comprising
- an oil-in-water emulsified creamer composition comprising
   - an oil component comprising micronized r&g coffee incorporated therein, and
   - a creamer component, e.g. comprising sodium caseinate;
   and
- 5-40% (w/w) soluble coffee,
wherein the amount of micronized r&g coffee incorporated in the oil constitutes from 10-80% (w/w) of the total amount of coffee in the coffee mix.

The present invention will now be described in more detail in the following.

### Figures

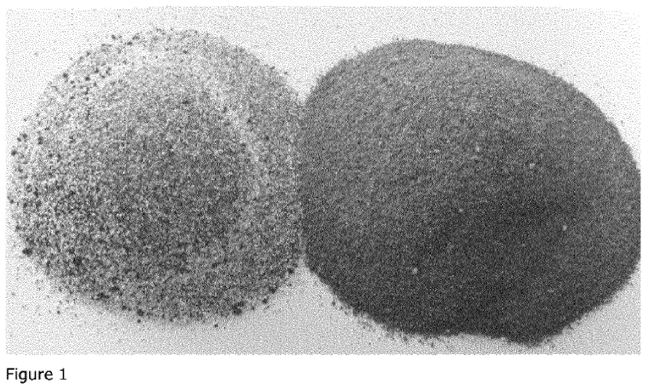

Figure 1: Final composition of sample 1 (left) and 2 (right) as described in table 4 below.

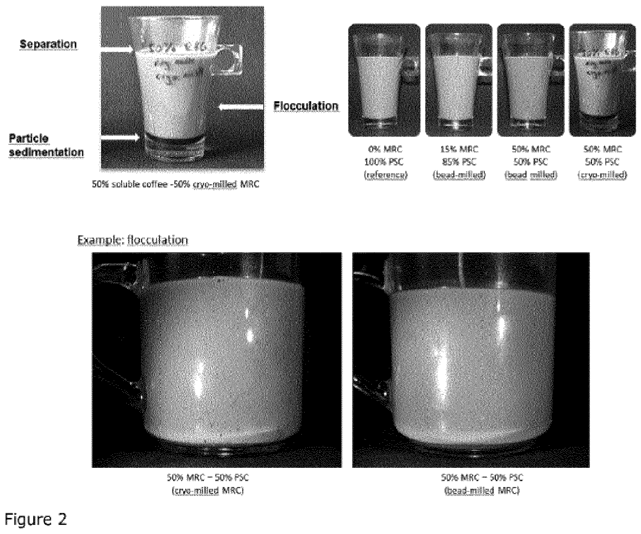

Figure 2: Pictures of cup without MRC (reference), with bead-milled MRC (solution) and with non-bead-milled MRC added in dry-mix (leading to problems of dissolution, texture and appearance in the end cup).

The pictures show the case of a substantial amount of MRC added in the cup (e.g. 15%, 50%).

### Detailed description of the invention

### Process for providing creamer compositions to be used in the coffee mix of the invention

The creamer composition to be used in the coffee mix of the invention, may be prepared by a process comprising
a) mixing in a first mixing step an oil component with roast and ground (r&g) coffee, thereby providing a first composition comprising micronized r&g coffee incorporated in the oil component;
b) providing a aqueous creamer component;
c) mixing in a second mixing step the first composition with the aqueous creamer component;
d) homogenising the composition of step c), thereby providing an oil-in-water emulsion;
e) optionally, adding a sweetener source to the oil-in-water emulsion;
f) optionally, pasteurizing the oil-in-water emulsion;
g) optionally, drying the oil-in-water emulsion; and
h) providing a creamer composition.

The order of mixing the different components may vary. Preferably, the oil phase and an aqueous phase are prepared separately. Emulsifiers are usually mixed into the oil but may also be added to the aqueous phase. Protein and other creamer components are dissolved in the aqueous phase. The two phases are then mixed and homogenized to produce an emulsion, which can be used in liquid form or dried. The r&g particles may be incorporated into (and milled in) only a part of the oil and additional oil may be added afterwards. Thus, in an embodiment one or more further oil components are added after step d), such as before pasteurization and/or drying.

The r&g coffee particles are preferably micronized after addition to the oil (e.g. by milling), but the r&g coffee particles may also be provided to the oil in a micronized form. Non-limiting examples of coffees which may be used in the invention are Robusta, Arabica and mixes thereof.

Emulsifiers are preferably added to the first composition in step a), but it may also be added in other steps. Thus, in an embodiment the one or more emulsifiers are added
- to the first composition in step a); and/or
- to the aqueous creamer component in step b); and/or
- during the mixing step c); and/or
- during the homogenisation step d).
The creamer composition in the coffee mix of the invention may comprise low molecular weight emulsifiers. By a low molecular weight emulsifier is meant an emulsifier with a molecular weight below 1500 g/mol. Emulsions are thermodynamically unstable, and the phases of an emulsion will separate with time. By an emulsifier is meant a compound that stabilises the interface between the two phases of the oil-in-water emulsion and reduces the rate of phase separation. In an embodiment the emulsifiers are selected from the group consisting monoglycerides, diglycerides, acetylated monoglycerides, sorbitan trioleate, glycerol dioleate, sorbitan tristearate, propyleneglycol monostearate, glycerol monooleate and monostearate, sorbitan monooleate, propylene glycol monolaurate, sorbitan monostearate, sodium stearoyl lactylate, calcium stearoyl lactylate, glycerol sorbitan monopalmitate, diacetylated tartaric acid esters of monoglycerides, lecithins, lysolecithins, succinic acid esters of mono- and/or diglycerides, lactic acid esters of mono- and/or diglycerides, lecithins, lysolecitins, proteins and sucrose esters of fatty acids, lecithin (e.g. soy lecithin, canola lecithin, sunflower lecithin, and/or safflower lecithin), lysolecithins, and combinations thereof.

The mixing step a) may be performed by different means. In an embodiment the first mixing step a) is done by milling to micronize the r&g coffee component. In the present context the term "micronize" relates to a process wherein the particles are processed to an average particle size below 100 micrometers (µm), such as in the range 0.1-50 µm, such as in the range 1-30 µm, such as in the range 1-20 µm. Similar the term "micronized" relates to particles with an average particle size below 100 micrometers (µm), such as in the range 0.1-50 µm, such as in the range 1-30 µm, or such as in the range 1-20 µm. Milling is preferably performed in a ball mill by wet milling or dry milling. In one embodiment of the invention, the first mixing step a) is done by milling to micronize the r&g coffee component. The milling may be for instance a roller milling of R&G in oil or melted fat or impact milling of R&G into oil.

The oil component of step a) may be selected from different sources. In one embodiment the oil component of step a) comprises oil selected from the group consisting of palm kernel oil, canola oil, soy bean oil, sunflower oil, safflower oil, cotton seed oil, palm oil, milk fat, corn oil, and/or coconut oil. The oil is preferably present in the creamer composition in an amount of at most about 50% (weight/weight), the amount of oil in the creamer composition may e.g. be between 1% and 40% (weight/weight), such as in the range 5-40%, such as in the range 10-40%, such as in the range 5-30%, or such as in the range between 10-30%. In the present context when oil is included in the weight/weight percentages the % relates to the non-water part but including oil (solid content + oils). The total amount of oil component comprising micronized r&g coffee therein in the creamer composition may also vary. Thus, in yet a further embodiment the creamer composition comprises at least 5% (w/w) of the oil component comprising micronized r&g coffee therein, such as in the range 5-50%, such as 5-40%, such as 5-30%, such as in the range 5-20%, or such as in the range 5-15%. In another embodiment the creamer composition comprises at least 20% (w/w) of the oil component comprising micronized r&g coffee therein. It is to be understood that these weight % includes both the oil and the micronized r&g coffee therein.

In the context of the present invention, mentioned percentages are weight/weight percentages of dry solids (on a dry matter basis) unless otherwise stated.

The process also includes the addition of a creamer component, preferably in an aqueous form. By a creamer composition/ is meant a composition that is intended to be added to a food composition, such as e.g. coffee or tea, to impart specific characteristics such as colour (e.g. whitening effect), flavour, texture, mouthfeel and/or other desired characteristics. The creamer component provided in step b) is in a liquid form, but the final creamer composition of the invention may be in a liquid form or in a powdered (dry) form. In the present context dried coffee is to be understood as having a moisture content below 10%, preferably below 5% or more preferably below 3% water.

The creamer component may be any ingredient or combination of ingredients useful for inclusion in a creamer composition. Thus, in an embodiment the creamer component of step b) is or comprises a protein, a hydrocolloid, a buffering agent, and/or a sweetener.

The creamer composition preferably comprises protein in the range 0.5-15%, such as 1.5-10% such as 1.5-5% preferably between about 0.1-3% protein, such as between about 0.2-2% protein, more preferably between about 0.5% (weight/weight) and about 1.5% protein. The protein may be any suitable protein, e.g. milk protein, such as casein, caseinate, and whey protein; vegetable protein, e.g. soy and/or pea protein; and/or combinations thereof. The protein is preferably sodium caseinate. The protein in the composition may work as an emulsifier, provide texture, and/or provide whitening effect. Too low levels of protein may reduce the stability of the liquid creamer. At too high protein levels the viscosity of the product may be higher than desired and too high for liquid processing.

The creamer composition (e.g. provided in the creamer component) may comprise a hydrocolloid. Hydrocolloids may help to improve physical stability of the composition. Suitable hydrocolloids may e.g. be carrageenan, such as kappa-carragenan, iota-carragenan, and/or lambda-carragenan; starch, e.g. modified starch; cellulose, e.g. microcrystalline cellulose, methyl cellulose, or carboxymethyl cellulose; agar-agar; gelatine; gellan (e.g., high acyl, low acyl); guar gum; gum Arabic; kojac; locust bean gum; pectin; sodium alginate; maltodextrin; tracaganth; xanthan; or a combination thereof.

The creamer (e.g. provided in the creamer component) in the coffee mix of the present invention may further include a buffering agent. The buffering agent can prevent undesired creaming or precipitation of the creamer upon addition into a hot, acidic environment such as coffee. The buffering agent can e.g. be monophosphates, diphosphates, sodium mono- and bicarbonates, potassium mono- and bicarbonates, or a combination thereof. Preferred buffers are salts such as potassium phosphate, dipotassium phosphate, potassium hydrophosphate, sodium bicarbonate, sodium citrate, sodium phosphate, disodium phosphate, sodium hydrophosphate, and sodium tripolyphosphate. The buffer may e.g. be present in an amount of about 0.1 to about 3% by weight of the creamer.

The creamer composition (e.g. provided in the creamer component) in the coffee mix of the present invention may further include one or more additional ingredients such as flavors, sweeteners, colorants, antioxidants (e.g. lipid antioxidants), or a combination thereof. Sweeteners can include, for example, sucrose, fructose, dextrose, maltose, dextrin, levulose, tagatose, galactose, corn syrup solids and other natural or artificial sweeteners. Sugarless sweeteners can include, but are not limited to, sugar alcohols such as maltitol, xylitol, sorbitol, erythritol, mannitol, isomalt, lactitol, hydrogenated starch hydrolysates, and the like, alone or in combination. Usage level of the flavors, sweeteners and colorants will vary greatly and will depend on such factors as potency of the sweetener, desired sweetness of the product, level and type of flavor used and cost considerations. Combinations of sugar and/or sugarless sweeteners may be used. In one embodiment, a sweetener is present in the creamer composition of the invention at a concentration ranging from about 5-90% by weight of the total composition, such as in the range 20-90%, preferably such as 20-70%. In another embodiment, the sweetener concentration ranges from about 40% to about 60% by weight of the total composition. In a preferred embodiment the sweetener of step e) is glucose syrup.

In a preferred embodiment the creamer component comprises sodium caseinate, dipotassium phosphate, sodium hexametaphosphate, trisodium citrate, sodium chloride and water. In yet an embodiment the creamer component of step b) is a non-dairy creamer. When sodium caseinate is processed, it is so materially altered that both dairy scientists and government regulators no longer regard it as a true dairy substance. This is why sodium caseinate can be an ingredient in non-dairy products according to FDA's regulation.

Examples of typical creamer compositions are presented in tables 1-3 below.

**Table 1: Non-dairy creamers**

| **Ingredients (in % by weight)** | **Non-dairy (NDC)** | | |
|---|---|---|---|
| | LOW FAT | REGULAR | HIGH FAT |
| Milk solids non-fat (SNF) | no | no | no |
| Casein / caseinate | 1.5 - 3.0 | 1.5 - 3.0 | 1.5 - 3.0 |
| Lactose / sweet whey | no | 110 | no |
| Glucose syrup | 80-90 | 50-60 | 40-50 |
| Milk fat | no | no | no |
| Vegetable fat | 10-20 | 30-35 | 40-45 |
| Emulsifiers | yes | yes | yes |
| Buffer salts | yes | yes | yes |
| Flavours | optional | optional | optional |
| Colorants | optional | optional | optional |
| Flowing agents | optional | optional | optional |
| Moisture | 1-3 | 1-3 | 1-3 |

**Table 2: Filled dairy creamers**

| **Ingredients (in % by weight)** | **Filled dairy (FDC)** | | |
|---|---|---|---|
| | LOW FAT | REGULAR | HIGH FAT |
| Milk solids non-fat (SNF) | 70-90 | 20 - 40 | 20 - 40 |
| Casein / caseinate | optional | optional | optional |
| Lactose /sweet whey | 0-10 | 20 - 40 | 20 - 40 |
| Glucose syrup | optional | optional | optional |
| Milk fat | no | no | no |
| Vegetable fat | 0-10 | 25-30 | 35-40 |
| Emulsifiers | no | no | no |
| Buffer salts | yes | yes | yes |
| Flavours | optional | optional | optional |
| Colorants | optional | optional | optional |
| Flowing agents | optional | optional | optional |
| Moisture | 1-3 | 1-3 | 1-3 |

**Table 3: Full dairy creamers**

| **Ingredients (in % by weight)** | **Full dairy** |
|---|---|
| Milk solids non-fat (SNF) | 30 - 40 |
| Casein / caseinate | optional |
| Lactose /sweet whey | 0 - 40 |
| Glucose syrup | no |
| Milk fat | 15 - 30 |
| Vegetable fat | No |
| Emulsifiers | no |
| Buffer salts | yes |
| Flavours | optional |
| Colorants | optional |
| Flowing agents | optional |
| Moisture | 1-3 |

The skilled person may produce other variants of creamers. Thus, the above creamer compositions are mere examples of creamer compositions.

The process may also include a pasteurizing step. Thus, in yet another embodiment the pasteurizing step f) is performed at a minimum temperature of 81°C for at least 5 seconds. The process may also include a drying step. Thus, in a further embodiment the drying step g) is performed by spray drying, vacuum band drying, roller drying or freeze drying.

### Product obtained/obtainable by process

The product obtained by the process has properties different from creamers where coffee is not captured in the oil phase of the oil-in-water emulsion. This is underlined by the sensory test performed in example 2.

### Oil-in-water emulsified creamer composition

As mentioned above, the process provides an oil-in-water emulsified creamer composition with unique sensory parameters. Thus, the process provides an oil-in-water emulsified creamer composition comprising
- an oil component comprising micronized r&g coffee incorporated therein; and
- an aqueous creamer component, e.g. comprising sodium caseinate.

As previously mentioned the creamer may also be in a dried form. Therefore, the process also provides an oil-in-water emulsified dry creamer composition comprising
- an oil component comprising micronized r&g coffee incorporated therein; and
- a creamer component, e.g. comprising sodium caseinate.

The amount of micronized r&g coffee may also be defined in relation to the amount of oil in which it is incorporated. Thus, the weight/weight ratio (or ratio by weight) between the amount of micronized r&g coffee incorporated in the oil to the amount of oil is in the range 0.01:1 - 2:1, such as 0.05:1 - 2:1, such as 0.1:1 - 2:1, such as 0.1:1 - 1:1, such as 0.4:1 - 1:1, such as 0.6:1 - 1:1, such as 0.8:1 - 1, or such as 1:1.

In the context of the present invention, the terms "ratio by weight" "(weight/weight)" or "weight/weight ratio" refers to the ratio between the weights of the mentioned compounds.

It is to be understood that the creamer compositions in the coffee mixes of the invention may both be in a dry format (moisture content below 10%, preferably below 5%, and even more preferably below 3%) or in a liquid state.

An example of a preferred coffee composition of the invention includes:
A coffee mix composition according to the invention comprising
- creamer composition as described herein,
- 5-40% (w/w) soluble coffee; and
- 10-85% (w/w) of a sugar source, such as sucrose.

By soluble coffee is meant a dried, usually powdered, composition of coffee solids that are soluble in water. Soluble coffee is usually produced by extracting soluble solids from r&g coffee with water and subsequently drying the extract.

It is also to be understood that the coffee compositions of the invention may both be in a dry format (moisture content preferably below 5%) or in a liquid state.

The amount of the r&g coffee incorporated (e.g. dispersed) in the oil component constitutes 10-80% (w/w) of the total amount of coffee present in the coffee mixes, such as 10-60%, or such as 10-40%. As shown in examples 1 and 2, creamers have been produced where the micronized r&g coffee constitutes from 15-100% of the total amount of coffee in the coffee mixes. It is noted that taste/aroma improvements are seen in all the tested samples when compared to the control.

The invention will now be described in further details in the following non-limiting examples.

### Examples

### Example 1

### Process for providing creamer

### Methods

Roast and ground coffee (r&g) was mixed with pre-heated palm kernel oil and micronized using a wet bead mill (Alpine Hydro-Mill 90 AHM) (T=55°C, zirconium oxide bead 1.7/1.9 mm, 3000 RPM). The oil containing micronized coffee particles was then mixed with monoglyceride Dimodan^{™} and Panodan^{™} (Dupont). In parallel typical non-dairy creamer ingredients (sodium caseinate, dipotassium phosphate, sodium hexametaphosphate, trisodium citrate, and sodium chloride) were mixed in water and stirred in a vessel at 50°C.

These two mixes were then mixed and stirred at 50°C with the addition of glucose syrup. The final mix was homogenized (APV-HTST) and pasteurized (APV-HTST at 85°C during 5 sec). The pasteurized mix was then spray-dried (NIRO SD-6.3-N) at 160°C.

The above process was performed to produce the compositions presented in table 4.

**Table 4:**

| | 1 | 2 | 3 | 4 |
|---|---|---|---|---|
| | Reference (0% MRC) | 15% MRC | 50% MRC | Reference (100% MRC) (not according to the invention) |
| Soluble coffee | 2 g | 1.7 g | 1 g | 0 g |
| MRC* coffee | 0 g | 0.3 g | 1 g | 2 g |
| Creamer | 6 g | 6 g | 6 g | 6 g |
| Sugar | 10 g | 10 g | 10 g | 10 |
| Oil** | 2 g | 2 g | 2 g | 2 g |
| *MRC=Micronized roasted coffee | | | | |
| ** The 2 g is part of the 6 g creamer | | | | |

### Example 2

### Use of creamer

### Methods

This non-dairy creamer containing micronized roasted coffee particles was dry-mixed with sugar and pure soluble coffee to produce beverage powders (coffee mix powders) containing various fractions of micronized roasted coffee (see example 1).

Thus, the percentages of MRC in table 4 refer to how much of the soluble coffee normally present in a coffee mix has been replaced by micronized r&g coffee particles incorporated into the creamer oil. The amount of creamer (6 g) refers to the amount of creamer excluding the micronized r&g coffee particles incorporated therein. This means that in the sample with 100% replacement the actual amount of creamer is 8 g.

### Results

The sensory characteristics of creamer and coffee beverages with added creamer were judged by sensory panelists. It was found by the panel that the composition of present invention exhibited a smooth and stable suspension with enhanced coffee taste and aromas. Sedimentation was absent during consumption. The higher percentage of soluble coffee being substituted with MRC, the more intense coffee aroma was perceived.

### Conclusion

The novel process for providing micronized r&g coffee to the oil provides creamer compositions with enhanced taste and aroma.

### Example 3

### Analysis of volatile compounds of the composition

### Methods

Roast and ground coffee (r&g) was mixed with pre-heated palm kernel oil and micronized using a wet bead mill (Alpine Hydro-Mill 90 AHM) (T=55°C, zirconium oxide bead 1.7/1.9 mm, 3000 RPM). The oil containing micronized coffee particles was then mixed with monoglyceride Dimodan^{™} and Panodan^{™} (Dupont). In parallel typical non-dairy creamer ingredients (sodium caseinate, dipotassium phosphate, sodium hexametaphosphate, trisodium citrate, sodium chloride) were mixed in water and stirred in a vessel at 50°C.

These two mixes were then mixed and stirred at 50°C with the addition of glucose syrup. The final mix was pasteurized (Heat Plate Exchanger - 85°C during 20 sec) and homogenized (2 steps - 180 bars + 40 bars). The pasteurized mix was then spray-dried (EGRON 3.5m) with high spraying pressure (160 Bars) under hot air at 230°C, resulting in a homogeneous brownish powder with final humidity of 3%.

| | Reference Sample (pure dry mix) | Invention |
|---|---|---|
| MRC Level | 0% MRC | 15% MRC |
| Soluble coffee | 2 g | 1.7 g |
| MRC* coffee | 0 g | 0.3 g |
| Creamer | 6 g | 6 g |
| Sugar | 10 g | 10 g |
| Oil** | 2 g | 2g |
| *MRC=Micronized roasted coffee | | |
| ** The 2 g is part of the 6 g creamer | | |

### Selection of low volatile compounds

Typical low volatile coffee compounds were selected based on the following criteria:
- Relevant as key odorant compound.
- Possibility to be selectively monitored in the headspace by the PTR-TOF-MS instrument.
- Low volatility (Henry's Low Constant: HLC > 0.1 mol / (m³ *Pa) in water at 65°C).
(HLC from internal data base, (Luigi Poisson PTC-Orbe).

| Compounds | Type of chemical coumpounds | Formula [M] | Exact mass (protonated ion) [MH]+ | Henry's Low Constant (HLC) / (mol /m³ *Pa) |
|---|---|---|---|---|
| - Ethyl dimethyl pyrazine - Diethylpyrazine Telramethylpyrazine | Alkyl Pyrazine | C_{B}H₁₂N₂ | 137.1073 | 0.124 |
| - Guaiacol | Phenol | C₇H₈O₂ | 125.0597 | 0.351 |
| - Vinylguaiacol | Phenol | C₉H₁₀O₂ | 151.0754 | 0.277 |

The three pyrazines and their isomers have the same molecular formula (C8H12N2) and therefore can't be separated on-line by mass spectrometry method.

### Method:

A double-jacketed, water-heated sample cell (250 mL glass vessel) was mounted inside an oven set to 85°C with active air circulation. A temperature stabilized water bath was connected to the double-jacketed cell and set to stabilize the sample temperature at 60°C. A double jacketed addition funnel filled of water was connected to the cell and water was maintained at 80°C by a water bath.

The mix powder was put inside the cell and water from the addition funnel was added under continuous stirring with a bar magnet (35 x 7mm) at 250 rpm to actively dissolve the powder in water.

The sample headspace was purged continuously with pure nitrogen at 300sccm (Standard Cubic Centimeter per Minute). Before analyzing by the PTR-TOF-MS instrument, the purged gas was diluted at 3300 sccm with pure nitrogen to avoid saturation of the instrument.

The PTR-TOF-MS operate at a P_{drift} = 2.2mbar and U_{drift} = 600V. A full spectra was recorded every 1s from 0 to 190m/z.

### Results

The release of volatile compounds increases drastically during the dissolution of the mix powder with hot water and then stabilized when sample reach its target temperature (60°C) controlled by the water bath.

The concentration of volatiles in the headspace in Part Per Billion Volume (ppbV) was calculated from the PTR-MS Viewer 3.1. Software (Ionicon Company). The factor of dilution f=11 (from the Purge gas at 300 sccm and the dilution gas at 3000 sccm) was not taken into account in the result. In a real case, a dilution also occurs in the real case above the cup by natural air flow convection.

To reduce the instrumental data from the release curve and to include only the most relevant information, data was extracted during a time period of 50s starting from when the mix powder was completely dissolved and the temperature has reached is target temperature at 60°C (=> 330s after the water started to be added on the mix powder). Blank measurement with water was subtracted to the samples.

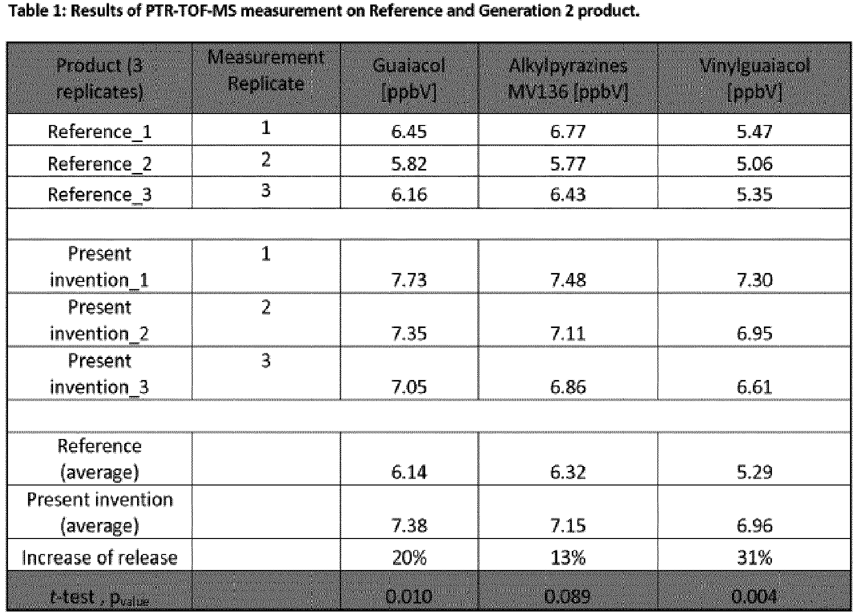

An increase of the release was observed in the range of 13% for alkylpyrazine to 31 % for vinylguaiacol. A statistical t-test applied on these values shows a significant difference at a pᵥₐₗᵤₑ of 0.05 for the two phenols but not for the alkylpyrazine.

### Example 4

### Analysis of sensory attributes of the composition of present invention

### Methods

This non-dairy creamer containing micronized roasted coffee particles was dry-mixed with sugar and pure soluble coffee to produce beverage powders (coffee mix powders) where the fraction of MRC represents 15% of the total Coffee Content.

Thus, the percentages of MRC in table refer to how much of the soluble coffee normally present in a coffee mix has been replaced by micronized r&g coffee particles incorporated into the creamer oil. The amount of creamer (6 g) refers to the amount of creamer excluding the micronized r&g coffee particles incorporated therein. This means that in the mentioned sample the actual amount of creamer is 6.3 g.

Therefore, the final composition of both preparation is identical in terms of percentage of ingredients. The difference stand in the fact that 15% of the coffee content is now coming from MRC particles incorporated in creamer oil.

### Results

The sensory characteristics of the reference sample and sample of present invention with added MRC were judged by sensory panelists using comparative profiling. It was found by the panel that the products exhibit stronger rubbery and earthy notes in the taste and aromas of the beverage than the reference.

### Conclusion

The novel process for providing micronized r&g coffee to the oil provides creamer composition with enhanced taste and aroma.

## Claims

1. A coffee mix comprising
- an oil-in-water emulsified creamer composition comprising
- an oil component comprising micronized r&g coffee incorporated therein, and
- a creamer component, e.g. comprising sodium caseinate;
and
- 5-40% (w/w) soluble coffee,
wherein the amount of micronized r&g coffee incorporated in the oil constitutes from 10-80% (w/w) of the total amount of coffee in the coffee mix.

## Patentansprüche

1. Kaffeemix, umfassend
- eine Öl-in-Wasser emulgierte Getränkeweißerzusammensetzung, umfassend
- eine Ölkomponente, die mikronisierten gerösteten und gemahlenen Kaffee umfasst, der darin eingebunden ist, und
- eine Getränkeweißerkomponente, die z. B. Natriumcaseinat umfasst; und
- zu 5 bis 40 % (w/w) löslichen Kaffee,
wobei die Menge an mikronisiertem geröstetem und gemahlenem Kaffee, die in das Öl eingebunden ist, 10-80 % (w/w) der Gesamtmenge an Kaffee in dem Kaffeemix ausmacht.

## Revendications

1. Mélange pour café comprenant
- une composition de succédané de crème en émulsion huile-dans-eau comprenant
- un composant huileux comprenant du café torréfié et moulu micronisé incorporé dans celui-ci, et
- un composant de succédané de crème, comprenant, par exemple, du caséinate de sodium ;
et
- 5 à 40 % (p/p) de café soluble,
dans lequel la quantité de café torréfié et moulu micronisé incorporé dans l'huile constitue de 10 à 80 % (p/p) de la quantité totale de café dans le mélange pour café.
